# EUROPEAN PATENT APPLICATION

(11) **EP 2 482 187 A1**
(43) Date of publication of application: **01.08.2012**
(21) Application number: 10788939.6
(22) Date of filing: 17.06.2010
(51) Int. Cl.: G06F 9/445

(54) **SOFTWARE UPGRADING METHOD, SOFTWARE UPGRADING SYSTEM AND CLIENT**

(30) Priority: 26.10.2009 CN 200910236558
(71) Applicant: ZTE Corporation, Shenzhen, Guangdong 518057 (CN)
(72) Inventor: MA, Shengfeng, Shenzhen Guangdong 518057 (CN); ZHOU, Yi, Shenzhen Guangdong 518057 (CN)
(74) Representative: Anderson, Angela Mary
(86) International application number: PCT/CN2010/073995
(87) International publication number: WO 2010/145543

(57) **Abstract**

The present invention provides a method and system for upgrading software and a client. The method for upgrading software includes: acquiring by an upgrade engine in a client a software upgrade package, with the software upgrade package including an installation engine, and calling by the upgrade engine the installation engine so as to update the client with an upgrade resource file in the software upgrade package after the installation engine is called and activated. The present invention can effectively improve the flexibility and extensibility of software upgrade.

## Description

### Technical Field

The present invention relates to the technical field of software upgrading, and particularly, to a software upgrading method, a software upgrading system, and a client.

### Background of the Related Art

With the rapid development of the software industry and the Internet network, the lift cycle of the software product is also continuously shortened. Therefore, the online upgrade function of software emerges to meet the development trend. Currently, more and more software support online upgrade function, which improves the extensibility and flexibility of software and increases the life cycle of software. At the same time, it also challenges the traditional software design solution, and the past software design concept of one for all functions is no longer advocated, while the software design concept with good extensibility and supporting continuous upgrade has already become mainstream.

The main process of the software upgrading method in the related art is as follows: in the situation of networking, the upgrade engine in the client software detects whether there is a corresponding software upgrade package in a remote server, if yes, then the software upgrade package will be downloaded to the local, then the installation engine in the client software will be called so as to update the local according to the contents in the software upgrade package.

There mainly has the following problems in the software upgrading method in the related art: when the developers develop the software upgrade package, they have to carry out development totally based on the relevant settings in the installation engine in the client software, for example, it is required to place the specific update file at a specific location in the software upgrade package according to the preset acquisition path in the installation engine so that the installation engine can acquire this update file, which causes that the developers are quite passive and poor in flexibility.

### Content of the Invention

In view of this, the present invention provides a method and system for upgrading software, which can effectively improve the flexibility and extensibility of software upgrading.

A method for upgrading software, the method comprises steps of:
acquiring by an upgrade engine in a client a software upgrade package, and calling an installation engine in the software upgrade package; and
after being called and activated, the installation engine updating the client with an upgrade resource file in the software upgrade package.

The installation engine updating the client with an upgrade resource file in the software upgrade package is:
the installation engine acquiring an upgrade resource file list in the software upgrade package; and
the installation engine updating the client with the upgrade resource file according to a source storage path, destination path and corresponding operator of each upgrade resource file recorded in the upgrade resource file list.

Before the installation engine updating the client with an upgrade resource file in the software upgrade package, the method further comprises:
acquiring by the installation engine local version information of the client;
backing up by the installation engine the client and relevant data according to the local version information of the client; and
generating by the installation engine a version backup file list according to the client and relevant data backed up.

After generating by the installation engine a version backup file list according to the client and relevant data backed up, the method further comprises:
when the update of the client with the upgrade resource file is failed, the installation engine restoring the client and relevant data according to the source storage path and the destination storage path of the backup data recorded in the version backup file list.

After generating by the installation engine a version backup file list according to the client and relevant data backed up, the method further comprises: the installation engine adding a system add-in;
when the process of updating the client with the upgrade resource file is terminated accidentally and the system reboots, the method further comprising: the system add-in calling the installation engine;
accordingly, when the installation engine is called by the system add-in, the method further comprising: the installation engine restoring the client and relevant data according to the source storage path and destination storage path of the backup data recorded in the version backup file list; and
after the restoration of the client and relevant data is completed, the installation engine deleting the system add-in.

Before the installation engine updating the client with an upgrade resource file in the software upgrade package, the method further comprises:
the installation engine calling a pre-upgrade executed script in the software upgrade package, and before update the client with the upgrade resource file, the installation engine closing a relevant process of the client currently running by way of the pre-upgrade executed script;
accordingly, after the installation engine updating the client with an upgrade resource file in the software upgrade package, the method further comprises:
the installation engine calling a post-upgrade executed script in the software upgrade package, and after updating the client with the upgrade resource file, the installation engine starting a relevant process of the client which is currently running and closed by way of the post-upgrade executed script, and setting a right of a relevant file in the client.

Before the installation engine updating the client with an upgrade resource file in the software upgrade package, the method further comprises:
the installation engine backing up user configuration information in the client according to a user configuration information list in the software upgrade package;
after the installation engine updating the client with an upgrade resource file in the software upgrade package, the method further comprising:
after the upgrade of the client is completed, the installation engine restoring the user configuration information backed up according to the user configuration information list.

When the installation engine updating the client with an upgrade resource file in the software upgrade package, the method further comprises:
the installation engine calculating update progress of the upgrade resource file and reporting the update progress to the upgrade engine.

A system for upgrading software, the system comprises an upgrade engine and an installation engine, the upgrade engine being located in a client and the installation engine being located in a software upgrade package, wherein
the upgrade engine comprises:
an acquisition module, used for acquire the software upgrade package;
a call module, used for call the installation engine in the software upgrade package; and
the installation engine, used for, after the installation engine is called and activated, updating the client with an upgrade resource file in the software upgrade package.

The installation engine comprises:
a local version information acquisition module, used for acquiring local version information of the client;
a backup module, used for backing up the client and relevant data according to the local version information of the client; and
a version backup file list generation module, used for generating a version backup file list according to the client and relevant data backed up.

The installation engine further comprises:
a first rollback module, used for, when the upgrade is failed, restoring the client and relevant data according to a source storage path and a destination storage path of the backup data recorded in the version backup file list.

The installation engine further comprises:
an adding module, used for adding a system add-in, wherein the system add-in is used for calling the installation engine when the upgrade process is terminated accidentally and the system reboots;
a second rollback module, used for, when being called by the system add-in, restoring the client and relevant data according to the source storage path and the destination storage path of the backup data recorded in the version backup file list; and
a delete module, used for deleting the system add-in after the restoration of the client and relevant data is completed.

The installation engine further comprises:
a pre-upgrade executed script calling module, used for, before upgrading the client, calling a pre-upgrade executed script in the software upgrade package, wherein the pre-upgrade executed script is used for closing a currently running relevant process of the client; and
a post-upgrade executed script calling module, used for, when the upgrade of the client is completed, calling a post-upgrade executed script in the software upgrade package, wherein the post-upgrade executed script is used for starting a relevant process of the client which is currently running and closed by the pre-upgrade executed script, and setting the right of a relevant file in the client.

The installation engine further comprises:
a user configuration information backup module, used for backing up user configuration information in the client according to a user configuration information list in the software upgrade package; and
a restore module, used for, after the upgrade of the client is completed, restoring the user configuration information backed up according to the user configuration information list.

A client, comprising an upgrade engine, wherein the upgrade engine comprises:
an acquisition module, used for acquiring a software upgrade package; and
a calling module, used for calling an installation engine in the software upgrade package so as to update the client with an upgrade resource file in the software upgrade package after the installation engine is called and activated.

The present invention has the following beneficial effects:
the installation engine upgrading the client is placed in a software upgrade package, when the installation engine in the software upgrade package is called by the upgrade engine in the client, the client is upgraded, since the installation engine does not directly rely on the local, the flexibility and extensibility of the upgrading solution are improved; furthermore, the software upgrade package can also easily acquire the local information of the client by way of the installation engine, thus the client can be upgraded more flexibly.

The software upgrade package only includes the resource file currently to be updated, i.e. the granularity of the upgrading resource file is split to the minimum, therefore, the size of the software upgrade package is greatly reduced, and the traffic overhead of user upgrading is saved.

By way of backing up the user configuration information during upgrading and restoring the user configuration information after the upgrading is completed, the problem of losing user configuration information during upgrading is solved, improving user experience.

The right problem of file update in the Mac system is solved by adopting an update manner of interaction between program and script.

### Brief Description of Drawings

FIG. 1 is a schematic flowchart of a software upgrading method according to an embodiment of the present invention;
FIG. 2 is another schematic flowchart of a software upgrading method according to an embodiment of the present invention;
FIG. 3 is yet another schematic flowchart of a software upgrading method according to an embodiment of the present invention;
FIG. 4 is a schematic flowchart of a method for an installation engine to back up a wireless network card client according to an embodiment of the present invention;
FIG. 5 is a schematic flowchart of a method for an installation engine to back up a wireless network card client according to an embodiment of the present invention; and
FIG. 6 is a structural schematic diagram of a software upgrading system according to an embodiment of the present invention.

### Preferred Embodiments of the Present Invention

Hereinafter, the particular embodiments of the present invention will be further described in detail in conjunction with the accompanying drawings and embodiments.

An embodiment of the present invention provides a software upgrading method, which comprises the following steps.

Step 1. an upgrade engine in a client acquires a software upgrade package which has an installation engine therein;
the method for the upgrade engine in the client to acquire the software upgrade package can be as follows: detect whether there is a software upgrade package in a remote server and download the software upgrade package from the remote server to the local when it is detected that there is a software upgrade package in the remote server.

Step 2. the upgrade engine calls the installation engine in the software upgrade package so as to update the client with an upgrade resource file in the software upgrade package when the installation engine is called and activated.

In the above embodiment, since the installation engine upgrading the client is provided in the software upgrade package and does not rely on local setting, the development flexibility of the software upgrade package can be improved effectively. Furthermore, the software upgrade package can also easily acquire the local information, such as version number etc., of the client by way of the installation engine, so as to upgrade the client more flexibly.

The client in the embodiments of the present invention is what is usually called client software, such as wireless network card client, instant communication client, etc., the client can be divided into three main modules: function module, data module and upgrade engine, wherein the function module is mainly used for achieving the basic function of the client; the data module is mainly used for providing local configuration data required by the client during the function implementation process and user reserved data during the execution; and the upgrade engine is mainly used for calling the installation engine in the software upgrade package so as to upgrade the client thereby.

The software upgrade package in the embodiments of the present invention mainly includes: an installation engine and an upgrade resource file, wherein the upgrade resource file refers to the resource file currently to be updated, and the installation engine is mainly used for updating the client with the upgrade resource file. The installation engine is complied according to the structure design of the function module of the client currently to be upgraded.

The client upgrading process in the related art is generally equivalent to the process of completely installing the software. In addition to including the resource file currently to be updated, the software upgrade package further includes other resource files, so that it is required to completely upgrade the client to implement an insignificant change on the client, thus causing the software upgrade package being quite large, wasting the download traffic of the user. The software upgrade package according to the embodiments of the present invention only includes the resource file currently to be updated, i.e. the granularity of the upgrading resource file is split to the minimum, therefore, the size of the software upgrade package is greatly reduced, and the traffic overhead of user upgrading is saved.

Since the granularity of the upgrading resource file in the software upgrade package is split to the minimum, and the installation engine has no idea of the information about the upgrade resource file to be updated, the software upgrade package in the embodiments of the present invention further has an upgrade resource file list for recoding the information about all the upgrade resource files in the software upgrade package, such as the information of the source storage path, destination installation path, corresponding operators, etc. of each upgrade resource file in the software upgrade package. When upgrading the client, the installation engine first acquires the upgrade resource file list in the software upgrade package, and update the client with the upgrade resource file item by item according to the source storage path, destination installation path and corresponding operators of each upgrade resource file recorded in the upgrade resource file list.

Hereinafter, the process of the installation engine in the embodiments of the present invention upgrading the client will be described in detail.

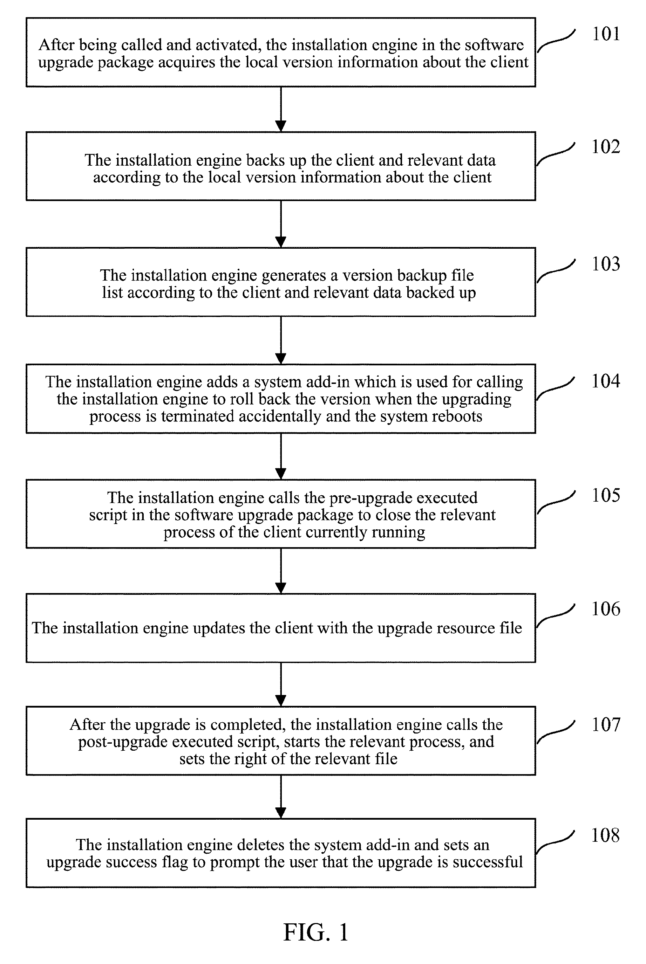

FIG. 1 shows a schematic flowchart of a software upgrading method according to an embodiment of the present invention, and the software upgrading method includes the following steps:

step 101: after being called and activated, the installation engine in the software upgrade package acquires the local version information about the client according to a local configuration file of the client; wherein, the local version information includes: UI (user interface) name of the client, UI's integrated path, drive, Lib library, etc.;

step 102: the installation engine backs up the client and relevant data according to the local version information about the client.

In order to avoid failure in upgrading the client, the installation engine further has a rollback function, i.e. before upgrading the client, the installation engine backs up the client and relevant data; and once the upgrade of the client is failed, the installation engine will roll back the version of the client according to the data backed up and restore the client to the state before upgrade.

In addition, in this step, the installation engine can also calculate the current backup progress according to the number of clients and the relevant data to be backed up and report the backup progress to the upgrade engine which displays the same to the user.

Step 103: according to the client and relevant data backed up, the installation engine generates a version backup file list, in which the information of the backup data such as the name, source storage path, destination storage path, etc. is stored.

When the upgrade of the client is failed, the installation engine will restore the client and relevant data according to the source storage path and destination storage path of the backup data recorded in the version backup file list. In particular, when restoring the client and relevant data, the installation engine performs the rollback operation of the client version by taking the destination storage path of the backup data recorded in the version backup file list as the source path of the restoration operation and taking the source storage path of the backup data recorded in the version backup file list as the destination path of the restoration operation so as to restore the client to the state before upgrade.

Step 104. the installation engine adds a system add-in which is used for calling the installation engine to roll back the client version when the upgrading process is terminated accidentally and the system reboots.

During the upgrade of the client, situations such as the system accidentally powers off or the installation engine accidentally collides and so on may occur, therefore, before upgrading the client, the installation engine can add a system add-in which can perform the function of calling the installation engine in the software upgrade package when the system reboots. When being called by the system add-in, the installation engine can restore the client and relevant data according to the source storage path and destination storage path of the backup data recorded in the version backup file list, i.e. roll back the client version.

Step 105. the installation engine calls the pre-upgrade executed script in the software upgrade package, which is used for closing the currently running relevant process of the client.

In the Mac OS system, when upgrading the client, it relates to the control of relevant process and operation on file right, therefore, an upgrade script file is added in the software upgrade package according to an embodiment of the present invention for controlling relevant process and set the right of relevant file in the client. The upgrade script file includes pre-upgrade executed script and post-upgrade executed script. At this moment, the installation engine in the software upgrade package also has the function of script interaction. Before upgrading the client, it calls the pre-upgrade executed script in the software upgrade package and closes the relevant process of the client currently running.

Step 106. the installation engine acquires the upgrade resource file list in the software upgrade package, and updates the client with the upgrade resource file according to the source storage path, destination installation path and corresponding operators of each upgrade resource file recorded in the upgrade resource file list.

According to different upgrading situations, the operators can include: add, delete, replace, modify, and move.

When upgrading the client, the installation engine can calculate the current update progress of the upgrade resource file according to the number of upgrade resource files and report the update progress to the upgrade engine which displays the same to the user.

Step 107. after the upgrade of the client is completed, the installation engine calls the post-upgrade executed script in the software upgrade package, which is used for starting the relevant process of the client which is currently running and closed by the pre-upgrade executed script and set the right of the relevant file in the client.

Since the file update of the client is usually involved with right in the Mac system, which causes that some files cannot be updated or the file attributes change after updated, the post-upgrade executed script can set the right of the relevant file in the client according to an embodiment of the present invention.

Step 108. the installation engine deletes the system add-in and sets an upgrade success flag to prompt the user that the upgrade is successful.

Furthermore, the client usually also includes some user configuration information, and in the related art, when upgrading the client, the user configuration information is not totally separated from other files of the client, which causes that some user configuration information is lost during upgrading.

In order to prevent user configuration information being lost during upgrading, in the software upgrade package according to an embodiment of the present invention, a user configuration information list is also included therein which records information of the user configuration information list in the client software such as name, storage path and so on, and when upgrading the client software, the installation engine can back up the user configuration information in the client according to the user configuration information list in the software upgrade package. After the upgrade of the client is completed, the installation engine restores the user configuration information backed up according to the user configuration information list.

Hereinafter, the software upgrading method according to an embodiment of the present invention will be described in detail by taking the client being a wireless network card client in the Mac OS operating system in the above embodiment as an example.

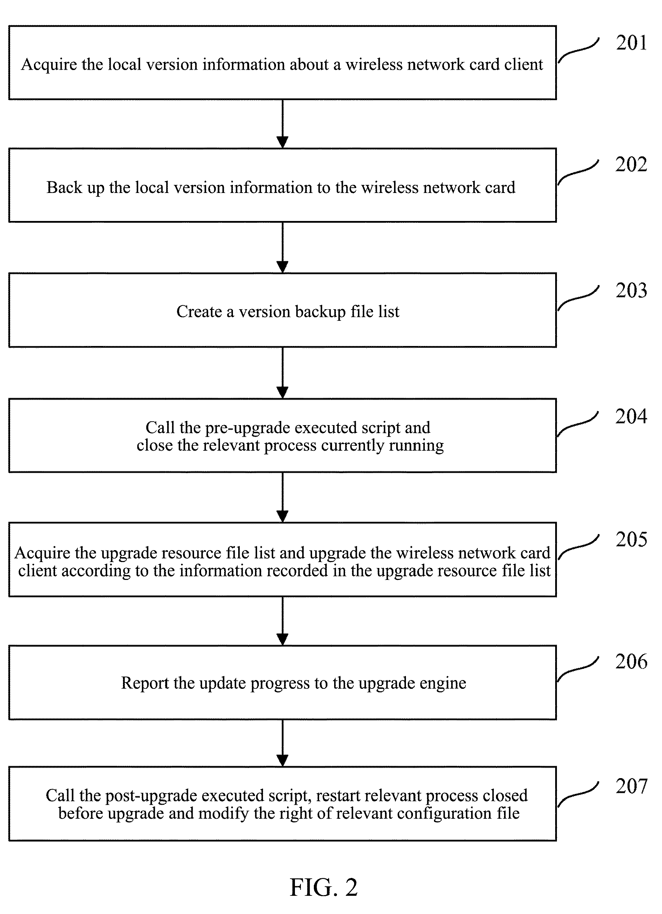

As shown in FIG. 2, it is another schematic flowchart of the software upgrading method according to an embodiment of the present invention, and the installation engine according to an embodiment of the present invention is compiled according to the structure design of the function module of the wireless network card client, the software upgrading method includes the following steps.

Step 201. after being called and activated by the upgrade engine in the wireless network card client, the installation engine in the software upgrade package acquires the local version information about the wireless network card client by reading the local version information file localInfo.plist of the wireless network card client, including a variable file and a fixed directory file. The variable file is a file which can be customized by the user in the client, and the fixed directory file is a client system file and cannot be changed by the user.

After the local installation of the wireless network card client is completed, a local version information file localInfo.plist will be created under the directory /System/Library/ModemList. The local version information file is used for recording information about the wireless network card client such as UI (user interface) name, UI completed path, drive, Lib library, etc.

Step 202. the installation engine backs up the local version information to the /tmp/RestoreDir/Contents path of the wireless network card.

Step 203. after the data backup of the wireless network card client is completed, the installation engine creates a version backup file list backupInfo.plist file. Once the upgrade of the wireless network card client is failed, the installation engine can restore the wireless network card client to the state before upgrade according to the backup information in the version backup file list backupInfo.plist file.

Step 204. the installation engine calls the pre-upgrade executed script in the software upgrade package, which is used for closing the relevant process, unload drive, and unload PPPMonitor program of the wireless network card client which are currently running.

In the Mac OS system, when upgrading the wireless network card client, it relates to the control of relevant process and operation of file right, therefore, a script file (pre-upgrade executed script and post-upgrade executed script) is added in the software upgrade package.

Step 205. the installation engine acquires the upgrade resource file list undateInfo.plist file and upgrade the wireless network card client according to the information recorded in the undateInfo.plist file.

When the software upgrade package is downloaded to the local and decompressed, the upgrade resource file list undateInfo.plist file will be stored under the /Library/Auto_Update/CMUpdatePackage directory, and the undateInfo.plist file records the source storage path of each upgrade resource file in the upgrade package, the destination installation path to be installed into the wireless network card client and the corresponding operators, and according to different upgrade situations, the operators can include: add, delete, replace, modify, and move.

Furthermore, during particular implementation, the installation engine reads the upgrade resource file list, creates an upgrade operation list in the memory according to the upgrade resource file list, and updates the wireless network card client with the upgrade resource files in the upgrade resource file list item by item.

At the same time, the installation engine can also back up the user configuration information in the wireless network card client according to the user configuration information list in the software upgrade package.

Step 206. the installation engine reports the update progress to the upgrade engine, and in the Mac system, the communication between installation engine and upgrade engine can be completed by way of an AppleEvent message.

When developing the installation engine, it is required to register the AppleEvent event, designate the corresponding AppleEvent message type and target process, compile an AppleEvent event sending function, and the functions of the sending function include two parts: one is to report the update progress to the upgrade engine, and the other is to report the error code during installation to the upgrade engine.

Step 207. after the upgrade of the wireless network card client is completed, the installation engine calls the post-upgrade executed script to restart relevant process, load drive, and load PPPMonitor program closed before upgrade and modify the right of relevant configuration file, and at the same time, guide the self-starting script, unload script, and update the local version information.

During upgrade, in order to prevent situations such as the installation engine accidentally collapses or the system accidentally powers off and so on, a system add-in of the installation engine also needs to be added after the data has been backed up so as to execute the system add-in after the system reboots, thus the installation engine in the software upgrade package is called to roll back the version of the wireless network card client, the procedure will be described in detail hereinafter.

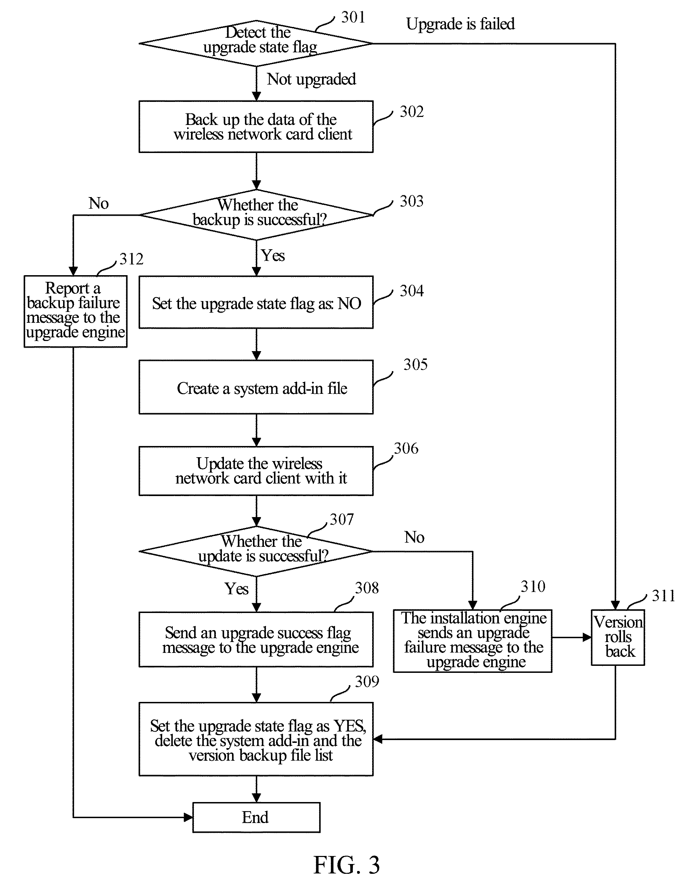

FIG. 3 shows yet another schematic flowchart of a software upgrading method according to an embodiment of the present invention, and the software upgrading method includes the following steps:

step 301. after being called and activated by an upgrade engine in a wireless network card client, an installation engine in a software upgrade package reads an upgrade state flag updateState.plist file under /System/Library/ModemList and detects the value of the upgrade state flag updateState.plist, if the value of the upgrade state flag updateState.plist is YES, it indicates that the upgrade has not been carried out and perform step 302, and if it is NO, it indicates that the previous upgrade is failed and perform step 311.

Step 302. the installation engine backs up the data of the wireless network card client.

Step 303. the installation engine judges whether the wireless network card client is backed up successfully, if yes, then perform step 304, otherwise perform step 312.

Step 304. the installation engine sets the value of the upgrade state flag updateState.plist under /System/Library/ModemList as: NO.

Step 305. the installation engine creates a system add-in file cn.com.zte.updater.plist under the /Library/LaunchAgents directory, and the system add-in file cn.com.zte.updater.plist includes the location of the installation engine in the software upgrade package, the system add-in file cn.com.zte.updater.plist is set as root right and executable right. Once accidents occur during upgrade, after the system reboots, the installation engine will be automatically called to perform the version rollback operation of the wireless network card client according to this system add-in file cn.com.zte.updater.plist.

Step 306. the installation engine updates the wireless network card client with the upgrade resource file in the software upgrade package.

Step 307. the installation engine judges whether the wireless network card client is updated successfully, if yes, then perform step 308, otherwise perform step 310.

Step 308. the installation engine sends an upgrade success flag message to the upgrade engine.

Step 309. the installation engine sets the value of upgrade state flag updateState.plist as YES, deletes the cn.com.zte.updater.plist file from the system, at the same time, deletes the version backup file list, and exits the upgrade process.

Step 310. the installation engine sends an upgrade failure message to the upgrade engine.

Step 311. the installation engine performs the version rollback operation of the wireless network card client and restores the wireless network card client to the state before upgrade, and after the version rollback is completed, perform step 309.

Step 312. the installation engine reports a backup failure message to the upgrade engine and exits the upgrade process.

Hereinafter, the process of the installation engine backing up the data of the wireless network card client according to an embodiment of the present invention.

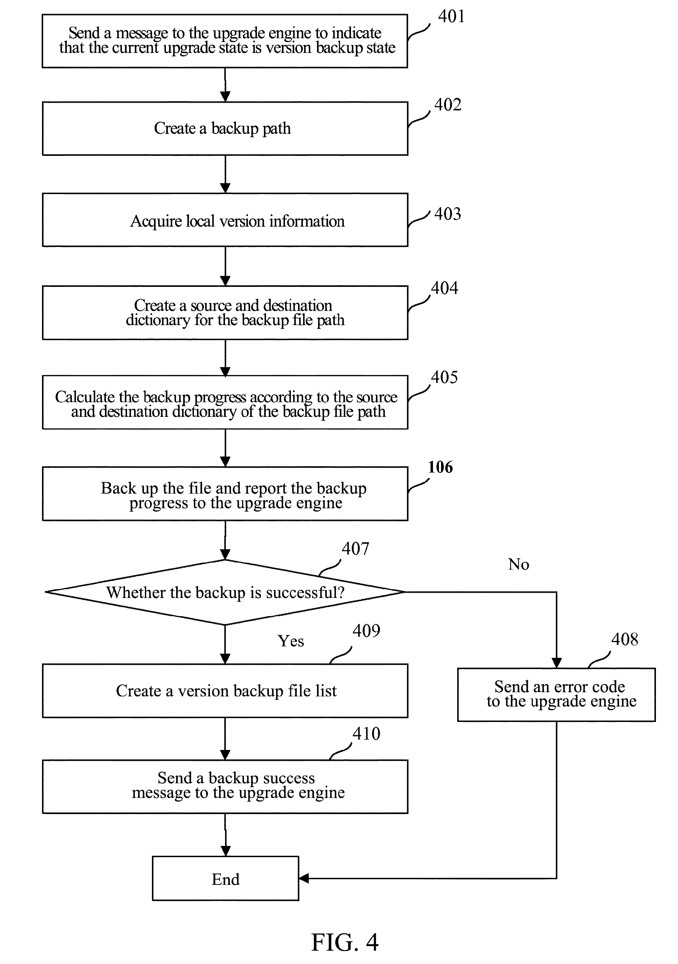

FIG. 4 is a schematic flowchart of a method for an installation engine to back up a wireless network card client, the backup method includes the following steps:

step 401. the installation engine sends a message to the upgrade engine to indicate that the current upgrade state is version backup state;

step 402. the installation engine creates a backup path /tmp/RestoreDir/Contents;

step 403. the installation engine reads the local version information file localInfo.plist under the /System/Library/ModemList directory to acquire local version information, such as UI name, UI path, drive name, library name information;

step 404. the installation engine determines the particular path of each file in the local version information under the backup directory and creates a source and destination dictionary for the backup file path;

step 405. the installation engine acquires the number of backup files according to the created source and destination dictionary of the backup file path and calculates the backup progress according to the number of backup files;

step 406. the installation engine backs up each file in the local version information one by one according to the created source and destination dictionary of the backup file path and reports the backup progress to the upgrade engine;

step 407. the installation engine judges whether the backup is successful, if yes, then perform step 409, otherwise perform step 408;

step 408. the installation engine sends an error code to the upgrade engine and exits the upgrade process;

step 409. the installation engine creates a version backup file list backupInfo.plist file under the /tmp/RestoreDir/Contents path according to the source and destination dictionary of the backup file path;

step 410. after the backup is completed, the installation engine sends a backup success message to the upgrade engine.

Hereinafter, the process of the installation engine updating the wireless network card client according to an embodiment of the present invention will be described in detail.

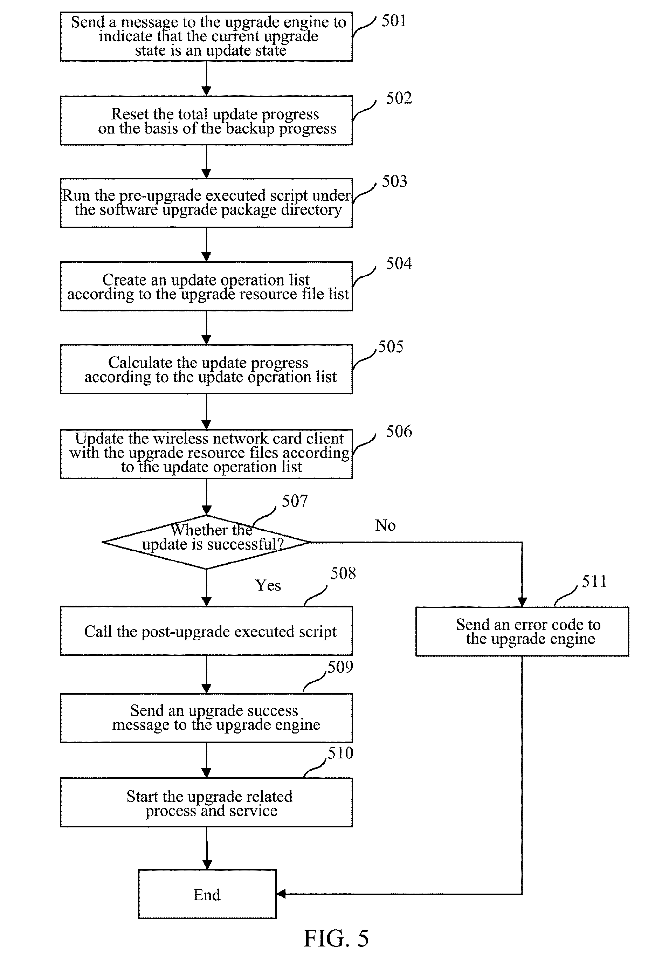

FIG. 5 is a schematic flowchart of a method for an installation engine to update a wireless network card client, and the update method includes the following steps:

step 501. the installation engine sends a message to the upgrade engine to indicate that the current upgrade state is a version update state;

step 502. the installation engine resets the total update progress on the basis of the backup progress;

step 503. the installation engine runs the pre-upgrade executed script preflight under the software upgrade package directory and closes upgrade related process. The upgrade process may relate to updating drive and system configuration file, therefore, these system add-ins have to be terminated, otherwise, even the files are updated in the Mac system, what are running in the system are still old files;

step 504. the installation engine reads the undateInfo.plis file in the software upgrade package, acquires the upgrade resource file list, and creates an update operation list according to the source storage address, destination installation address and operation code of each upgrade resource file recorded in the upgrade resource file list;

step 505. the installation engine calculates the number of all the upgrade resource files according to the created update operation list for calculating the update progress;

step 506. the installation engine updates the wireless network card client with the upgrade resource files one by one according to the created update operation list.

The user configuration information needs to be reserved during upgrade, and under the Packages/app/System/Library/ModemList directory of the software upgrade package, the userConfigFile.plist file records all the user configuration items.

The user configuration information is usually recorded in the local setting.plist and dialConfig.plist files. The user configuration information recorded in the setting.plist file is generated by the user operating the UI, such as setting auto networking, self-starting on boot, etc. Therefore, these user configuration information has to be listed, before upgrading, these information needs to be firstly stored, and when the latest setting.plist file is updated, these user configuration items are restored. The dialConfig.plist file stores the networking configuration information about the user, and the user may add new configuration information therein, therefore, the added part of the user has to be extracted out and add the part of contents therein after the update is completed. The setting.plist file also needs to be taken into account during update, since the setting.plist records the currently default APN configuration information, such as the current number, and the default options set by the user. Therefore, after the dialConfig.plist file is updated, the corresponding setting items of the setting.plist have to be recalculated and updated.

Step 507. the installation engine judges whether the update is successful, if yes, then perform step 508, otherwise perform step 511.

Step 508. the installation engine calls the post-upgrade executed script postflight update file under the software upgrade package directory.

The installation engine calls the postflight script in the software upgrade package to call the corresponding update script. The ON and OFF state of the update switch is set in the common file according to the update requirements, and postflight will check these filed during execution, if the value is YES, then the corresponding update script will be called. For example, the unload program needs to be updated, then the value of need_update_uninstall needs to be set as: YES, postflight will the corresponding update script of the unload program, wherein the script is located under the Resources/Uninstall directory in the software upgrade package.

The script file also needs to update the configuration file of UI. The attributes of UI are recorded in the info.plist file in Bandle of the UI, including key parameters such as UI name, internal and external version number, supported language, time, etc. In addition, the localInfo.plist configuration file under the /System/Library/ModemList directory records the state of the present version, such information as name, path, current version number of UI, and this configuration file is generated when upgrading the script during upgrade. The local localInfo.plist configuration file needs to updated each time when upgrade is carried out, and the parameter information is acquired by the common file in the software upgrade package, which ensures that each version corresponds to a version configuration file so as to accurately acquire the local state information during the next upgrade.

At the same time, the postflight script also needs to set the right of the configuration file. Since UI is a program with ordinary right, and the installation engine is a program running with root right and some configuration files created thereby are also with root right, which causes that these files cannot be operated when the UI runs, during update, these configuration files also need to be set as ordinary right.

Step 509. the installation engine sends an upgrade success message to the upgrade engine.

Step 510. the installation engine starts the upgrade relevant process and service.

When the update of the files to be updated is completed, they can be validate only after being reloaded into the system, and reloading is achieved by running the postflight script in the software upgrade package. The postflight script is responsible for restarting the process, load drive, and load PPPMonitor program. Since the installation engine runs with root right, starting some processes relates to the right problem, for example, the self-starting function can only be completed with the assistance of the upgrade engine.

Step 511. the installation engine sends an error code to the upgrade engine.

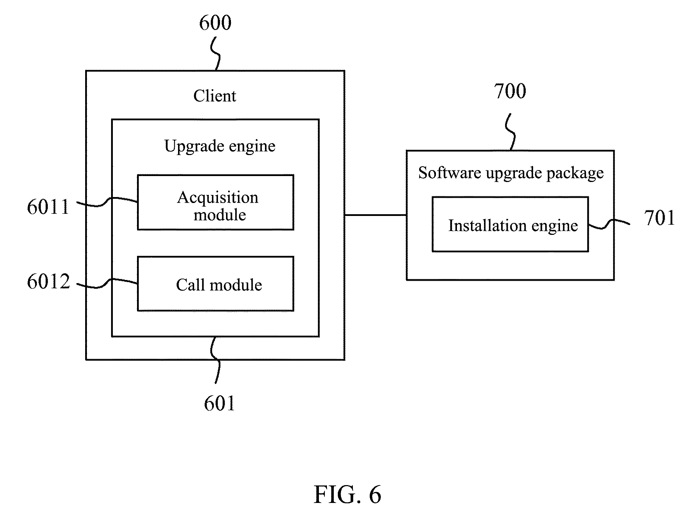

FIG. 6 shows a structural schematic diagram of a software upgrading system according to an embodiment of the present invention, and the software upgrading system includes a client 600 having an upgrade engine 601, and a software upgrade package 700.

The upgrade engine 601 includes:
an acquisition module 6011, used for acquiring a software upgrade package.

The method for the upgrade engine in the client to acquire the software upgrade package can be as follows: detect whether there is a software upgrade package in a remote server and download the software upgrade package from the remote server to the local when it is detected that there is a software upgrade package in the remote server.

A call module 6012, used for calling the installation engine in the software upgrade package; and
the software upgrade package 700 includes:
an installation engine 701, used for, after the installation engine is called and activated, updating the client with an upgrade resource file in the software upgrade package.

In the above embodiment, since the installation engine used for upgrading the client is configured in the software upgrade package and does not rely on the local setting, the development flexibility of software upgrade package can be improved effectively. Furthermore, the software upgrade package can also easily acquire the local information about the client by way of the installation engine, such information as version number of the client, etc., so as to upgrade the client more flexibly.

The client in the embodiments of the present invention is what is usually called client software, and the client can be divided into three main modules: a function module, a data module and an upgrade engine, wherein the upgrade engine is mainly used for calling the installation engine in the software upgrade package so that the installation engine in the software upgrade package upgrades the client.

The software upgrade package in the embodiments of the present invention mainly includes: an installation engine and an upgrade resource file, wherein the upgrade resource file refers to the resource file required to be upgraded currently, and the installation engine is mainly used for updating the client with the upgrade resource file. The installation engine is complied according to the structure design of the function module of the client currently to be upgraded.

The software upgrade package only includes the resource file currently to be updated, i.e. the granularity of the upgrading resource file is split to the minimum, therefore, the size of the software upgrade package is greatly reduced, and the traffic overhead of user upgrading is saved.

Since the granularity of the upgrading resource file in the software upgrade package is split to the minimum, and the installation engine has no idea of the information about the upgrade resource file to be updated, therefore, the software upgrade package in the embodiments of the present invention further has an upgrade resource file list for recoding the information about all the upgrade resource files in the software upgrade package, such as information of each upgrade resource file in the software upgrade package: the source storage path, destination installation path, corresponding operators, etc.. When the upgrading the client, the installation engine first acquires the upgrade resource file list in the software upgrade package, and update the client with the upgrade resource files one by one according to the source storage path, destination installation path and corresponding operators of each upgrade resource file recorded in the upgrade resource file list.

In order to avoid the failure in upgrading the client, the installation engine further has a rollback function, i.e. before upgrading the client, the installation engine backs up the client and relevant data; and once the upgrading of the client is failed, the installation engine will rollback the version of the client according to the data backed up and restore the client to the state before upgrade.

Therefore, the installation engine further comprises:
a local version information acquisition module, used for acquiring the local version information about the client; wherein the local version information including UI (user interface) name, UI complete path, drive, Lib library, etc. of the client;
a backup module, used for backing up the client and relevant data according to the local version information about the client; and
a version backup file list generation module, used for generating a version backup file list according to the client and relevant data backed up.

The installation engine further comprises:
a first rollback module, used for, when the upgrade is failed, restoring the client and relevant data according to the source storage path and destination storage path of the backup data recorded in the version backup file list.

During the upgrading of the client, situations such as the system accidentally powers off or the installation engine accidentally collides and so on may occur, therefore, before upgrading the client, the installation engine can add a system add-in which can perform the function of calling the installation engine in the software upgrade package when the system reboots. When being called by the system add-in, the installation engine can restore the client and relevant data according to the source storage path and destination storage path of the backup data recorded in the version backup file list, i.e. roll back the client version.

Therefore, the installation engine further comprises:
an adding module, used for adding a system add-in, with the system add-in being used for calling the installation engine when the upgrade process is terminated accidentally and the system reboots;
a second rollback module, used for, when being called by the system add-in, restoring the client and relevant data according to the source storage path and destination storage path of the backup data recorded in the version backup file list; and
a deleting module, used for deleting the system add-in after the restoration of the client and relevant data is completed.

In the Mac OS system, when upgrading the client, it relates to the control of relevant process and operation on file right, therefore, an upgrade script file is added in the software upgrade package of the embodiments of the present invention for control relevant process and set the right of relevant file in the client. The upgrade script file includes pre-upgrade executed script and post-upgrade executed script.

By then, the installation engine further comprises:
a pre-upgrade executed script call module, used for, before upgrading the client, calling a pre-upgrade executed script in the software upgrade package, with the pre-upgrade executed script being used for closing a relevant process of the client which is currently running; and
a post-upgrade executed script calling module, used for, when the upgrade of the client is completed, calling a post-upgrade executed script in the software upgrade package, with the post-upgrade executed script being used for starting a relevant process of the client which is currently running and closed by the pre-upgrade executed script, and setting the right of a relevant file in the client.

In order to prevent user configuration information being lost during upgrading, in the software upgrade package according to an embodiment of the present invention, a user configuration information list is also included therein which records information of the user configuration information list in the client software such as name, storage path and so on, and when upgrading the client software, the installation engine can back up the user configuration information in the client according to the user configuration information list in the software upgrade package. After the upgrade of the client is completed, the installation engine restores the user configuration information backed up according to the user configuration information list.

Therefore, the installation engine further comprises:
a user configuration information backup module, used for backing up the user configuration information in the client according to a user configuration information list in the software upgrade package; and
a restore module, used for, after the upgrade of the client is completed, restoring the user configuration information backed up according to the user configuration information list.

An embodiment of the present invention also provides a client, which includes an upgrade engine, and the upgrade engine includes:
an acquisition module, used for acquiring a software upgrade package; and the method for the upgrade engine to acquire the software upgrade package can be: detecting whether there is a software upgrade package on a remote server and downloading the same from the remoter server to the local when it is detected that there is a software upgrade package on the remote server;
a calling module, used for calling an installation engine in the software upgrade package so as to update the client with an upgrade resource file in the upgrade software package after the installation engine is called and activated.

In the above embodiment, since the installation engine used for upgrading the client is configured in the software upgrade package and does not rely on the local setting, the development flexibility of software upgrade package can be improved effectively. Furthermore, the software upgrade package can also easily acquire the local information about the client by way of the installation engine, such information as version number of the client, etc., so as to upgrade the client more flexibly.

The client according to an embodiment of the present invention is what is usually called client software, and the client can be divided into three main modules: a function module, a data module and an upgrade engine, wherein the upgrade engine is mainly used for calling the installation engine in the software upgrade package so that the installation engine in the software upgrade package upgrades the client.

The software upgrade package in the embodiments of the present invention mainly includes: an installation engine and an upgrade resource file, wherein the upgrade resource file refers to the resource file currently to be updated, and the installation engine is mainly used for updating the upgrade resource file into the client. The installation engine is complied according to the structure design of the function module of the client currently to be upgraded.

What is described above is merely preferred embodiments of the present invention, and it should be pointed out that several improvements and modifications also can be made without departing from the technical principle of the present invention for those skilled in the art, and these improvements and modifications also should be regarded as the scope of protection of the present invention.

## Claims

1. A method for upgrading software, the method comprising steps of:
acquiring by an upgrade engine in a client a software upgrade package, and calling an installation engine in the software upgrade package; and
after being called and activated, the installation engine updating the client with an upgrade resource file in the software upgrade package.

2. The method for upgrading software as claimed in claim 1, wherein the installation engine updating the client with an upgrade resource file in the software upgrade package is:
the installation engine acquiring an upgrade resource file list in the software upgrade package; and
the installation engine updating the client with the upgrade resource file according to a source storage path, destination path and corresponding operator of each upgrade resource file recorded in the upgrade resource file list.

3. The method for upgrading software as claimed in claim 1, before the installation engine updating the client with an upgrade resource file in the software upgrade package, the method further comprising:
acquiring by the installation engine local version information of the client;
backing up by the installation engine the client and relevant data according to the local version information of the client; and
generating by the installation engine a version backup file list according to the client and relevant data backed up.

4. The method for upgrading software as claimed in claim 3, after generating by the installation engine a version backup file list according to the client and relevant data backed up, the method further comprising:
when the update of the client with the upgrade resource file is failed, the installation engine restoring the client and relevant data according to the source storage path and the destination storage path of the backup data recorded in the version backup file list.

5. The method for upgrading software as claimed in claim 3, after generating by the installation engine a version backup file list according to the client and relevant data backed up, the method further comprising: the installation engine adding a system add-in;
when the process of updating the client with the upgrade resource file is terminated accidentally and the system reboots, the method further comprising: the system add-in calling the installation engine;
accordingly, when the installation engine is called by the system add-in, the method further comprising: the installation engine restoring the client and relevant data according to the source storage path and destination storage path of the backup data recorded in the version backup file list; and
after the restoration of the client and relevant data is completed, the installation engine deleting the system add-in.

6. The method for upgrading software as claimed in claim 1, before the installation engine updating the client with an upgrade resource file in the software upgrade package, the method further comprising:
the installation engine calling a pre-upgrade executed script in the software upgrade package, and before update the client with the upgrade resource file, the installation engine closing a relevant process of the client currently running by way of the pre-upgrade executed script;
accordingly, after the installation engine updating the client with an upgrade resource file in the software upgrade package, the method further comprising:
the installation engine calling a post-upgrade executed script in the software upgrade package, and after updating the client with the upgrade resource file, the installation engine starting a relevant process of the client which is currently running and closed by way of the post-upgrade executed script, and setting a right of a relevant file in the client.

7. The method for upgrading software as claimed in claim 1, before the installation engine updating the client with an upgrade resource file in the software upgrade package, the method further comprising:
the installation engine backing up user configuration information in the client according to a user configuration information list in the software upgrade package;
after the installation engine updating the client with an upgrade resource file in the software upgrade package, the method further comprising:
after the upgrade of the client is completed, the installation engine restoring the user configuration information backed up according to the user configuration information list.

8. The method for upgrading software as claimed in claim 1, when the installation engine updating the client with an upgrade resource file in the software upgrade package, the method further comprising:
the installation engine calculating update progress of the upgrade resource file and reporting the update progress to the upgrade engine.

9. A system for upgrading software, the system comprising an upgrade engine and an installation engine, the upgrade engine being located in a client and the installation engine being located in a software upgrade package, wherein
the upgrade engine comprises:
an acquisition module, used for acquire the software upgrade package;
a call module, used for call the installation engine in the software upgrade package; and
the installation engine, used for, after the installation engine is called and activated, updating the client with an upgrade resource file in the software upgrade package.

10. The system for updating software as claimed in claim 9, wherein the installation engine comprises:
a local version information acquisition module, used for acquiring local version information of the client;
a backup module, used for backing up the client and relevant data according to the local version information of the client; and
a version backup file list generation module, used for generating a version backup file list according to the client and relevant data backed up.

11. The system for upgrading software as claimed in claim 10, wherein the installation engine further comprising:
a first rollback module, used for, when the upgrade is failed, restoring the client and relevant data according to a source storage path and a destination storage path of the backup data recorded in the version backup file list.

12. The system for upgrading software as claimed in claim 10, wherein the installation engine further comprises:
an adding module, used for adding a system add-in, wherein the system add-in is used for calling the installation engine when the upgrade process is terminated accidentally and the system reboots;
a second rollback module, used for, when being called by the system add-in, restoring the client and relevant data according to the source storage path and the destination storage path of the backup data recorded in the version backup file list; and
a delete module, used for deleting the system add-in after the restoration of the client and relevant data is completed.

13. The system for upgrading software as claimed in claim 9, wherein the installation engine further comprises:
a pre-upgrade executed script calling module, used for, before upgrading the client, calling a pre-upgrade executed script in the software upgrade package, wherein the pre-upgrade executed script is used for closing a currently running relevant process of the client; and
a post-upgrade executed script calling module, used for, when the upgrade of the client is completed, calling a post-upgrade executed script in the software upgrade package, wherein the post-upgrade executed script is used for starting a relevant process of the client which is currently running and closed by the pre-upgrade executed script, and setting the right of a relevant file in the client.

14. The system for upgrading software as claimed in claim 9, wherein the installation engine further comprises:
a user configuration information backup module, used for backing up user configuration information in the client according to a user configuration information list in the software upgrade package; and
a restore module, used for, after the upgrade of the client is completed, restoring the user configuration information backed up according to the user configuration information list.

15. A client, comprising an upgrade engine, wherein the upgrade engine comprises:
an acquisition module, used for acquiring a software upgrade package; and
a calling module, used for calling an installation engine in the software upgrade package so as to update the client with an upgrade resource file in the software upgrade package after the installation engine is called and activated.
